**Europäisches Patentamt**

**European Patent Office**

**Office européen des brevets**

(11) Veröffentlichungsnummer: **0 230 019 B1**

# EUROPÄISCHE PATENTSCHRIFT

(45) Veröffentlichungstag der Patentschrift: **04.09.91**

(51) Int. Cl.⁵: **C08F 4/64**, C08F 10/02

(21) Anmeldenummer: **86117715.2**

(22) Anmeldetag: **19.12.86**

(54) **Verfahren zum Herstellen von Ethenpolymerisaten mittels eines Ziegler-Katalysatorsystems.**

(30) Priorität: **24.12.85 DE 3546018**

(43) Veröffentlichungstag der Anmeldung:
**29.07.87 Patentblatt 87/31**

(45) Bekanntmachung des Hinweises auf die
Patenterteilung:
**04.09.91 Patentblatt 91/36**

(84) Benannte Vertragsstaaten:
**AT BE DE FR GB IT NL**

(56) Entgegenhaltungen:
**EP-A- 0 021 822**
**EP-A- 0 041 157**
**GB-A- 1 300 734**

(73) Patentinhaber: **BASF Aktiengesellschaft**
**Carl-Bosch-Strasse 38**
**W-6700 Ludwigshafen(DE)**

(72) Erfinder: **Kerth, Juergen, Dr.**
**Hardenburgstrasse 2**
**W-6701 Maxdorf(DE)**
Erfinder: **Vogt, Heinz, Dr.**
**Pranckstrasse 30**
**W-6700 Ludwigshafen(DE)**

## Beschreibung

Die Erfindung liegt im Rahmen eines Verfahrens zum Herstellen kleinteiliger Homopolymerisate des Ethens oder Copolymerisate des Ethens mit unter geordneten Mengen $C_3$- bis $C_8$-, insbesondere $C_4$- bis $C_6$-alpha-Monoalken durch Polymerisation des bzw. der Monomeren bei Temperaturen im Bereich von 30 bis 150, insbesondere 50 bis 120 °C und Drücken im Bereich von 1 bis 200, insbesondere 5 bis 50 bar mittels eines Ziegler-Katalysatorsystems aus

(1) einer Titan enthaltenden Katalysatorkomponente, die erhalten worden ist als gefälltes Produkt beim Erzeugen einer Fällung in einer vorgelegten organischen Flüssigkeit durch Ein- und Zusammenbringen unter kräftiger Bewegung

(1.1) einer 0,1 bis 10, insbesondere 1 bis 2 molaren Lösung von Titantetrachlorid in einem flüssig vorliegendem, 5 bis 10, insbesondere 6 bis 8 Kohlenstoffatome aufweisenden Kohlenwasserstoff gesättigt-aliphatischer und/oder aromatischer Natur,

(1.2) einer 0,1 bis 10, insbesondere 1 bis 2 molaren Lösung einer aluminiumorganischen Verbindung der Summenformel $R_nAlCl_{3-n}$, worin stehen n für eine Zahl im Bereich von 1,5 bis 3, insbesondere 1,5 bis 2 und R für eine Alkylgruppe, die 1 bis 12, insbesondere 2 bis 4 Kohlenstoffatome enthält, in einem flüssig vorliegendem, 5 bis 10, insbesondere 6 bis 8 Kohlenstoffatome aufweisenden Kohlenwasserstoff gesättigt-aliphatischer und/oder aromatischer Natur sowie

(1.3) eines $C_2$- bis $C_8$-, vorzugsweise $C_2$- bis $C_4$-alpha-Monoalkens, und insbesondere von Ethen, und

(2) -einer Aluminium enthaltenden Katalysatorkomponente, die ein Trialkylaluminium ist, das pro Alkylgruppe 1 bis 12, insbesondere 2 bis 4 Kohlenstoffatome enthält,

mit der Maßgabe, daß das Atomverhältnis Titan aus der Katalysatorkomponente (1) : Aluminium aus der Katalysatorkomponente (2) im Bereich von 1 : 1 bis 1 : 200, insbesondere 1 : 5 bis 1 : 20, liegt.

Polymerisatsverfahren dieser Art sind bekannt, z.B. aus den US-PS 4 329 251 und 4 463 145.

Die betroffene Verfahrensart hat - ebenso wie in Parallele zu setzende andere Verfahrensarten - zum Kernstück eine in besonderer Weise ausgestaltete Titan enthaltende Katalysatorkomponente (1).

Die besonderen Ausgestaltungen dieser Katalysatorkomponente (1) werden bekanntlich vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit Übergangsmetall der Katalysatorkomponente (1) erhöht ist.

(b) Katalysatorsysteme, durch die weniger bzw. kein Halogen in das Polymerisat eingebracht wird; - was zu erreichen ist, indem

($b_1$) die Ausbeute gemäß (a) gesteigert wird und/oder

($b_2$) Katalysatorkomponenten (1) eingesetzt werden, die kein oder wenig Halogen enthalten.

(c) Katalysatorsysteme, die bei der Copolymerisation von Ethylen mit höheren alpha-Monoolefinen zu Copolymerisaten mit deutlich abgesenkten Polymerdichten führen.

(d) Katalysatorsysteme, die einfach und sicher herzustellen und gut handzuhaben sind; - z.B. solche, die sich in (inerten) Kohlenwasserstoff-Hilfsmedien zubereiten lassen.

(e) Katalysatorsysteme, die vergleichsweise geringe Mengen an Aluminium enthaltender Komponente (2) benötigen; - wodurch sich z.B. Ablagerungen und Korrosionsschäden an Reaktorteilen vermindern lassen.

(f) Katalysatorsysteme, durch welche die morphologischen Eigenschaften der Polymerisate in bestimmter Weise beeinflußt werden, etwa im Sinne einer einheitlichen Korngröße und/oder einer Verminderung des Feinstkornanteils und/oder eines hohen Schüttgewichtes; - was für die technische Beherrschung der Polymerisationssysteme, die Aufbereitung der Polymerisate und/oder die Verarbeitbarkeit der Polymerisate von Bedeutung sein kann.

(g) Katalysatorsysteme, die bei hoher Insgesamt-Produktivität eine Anfangs-Aktivität aufweisen, bei der Katalysatoreinschlüsse im Polymerisat weitgehend ausbleiben und die Verteilung des Katalysatorsystems besonders gut ist.

Nach den bisherigen Erfahrungen gibt es unter den mannigfachen Zielen etliche Ziele, die man durch besondere Ausgestaltung des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen lag auch die Aufgabenstellung, die zur vorliegenden Erfindung geführt hat: Eine neue Art Titan enthaltender Katalysatorkomponente (1) aufzuzeigen, mit der man gegenüber bekannten Titan enthaltenden Katalysatorkomponenten (1) - unter vergleichbarer Zielsetzung - bessere Ergebnisse erreichen kann, insbesondere was die vorgenannten Ziele (f) und (g) betrifft, die möglichst gut erreicht werden sollen, bei zugleich gutem Erreichen auch der Ziele (a) und (b).

Es wurde gefunden, daß die gestellte Aufgabe gelöst werden kann, wenn man bei dem eingangs definierten Polymerisationsverfahren ein Ziegler-Katalysatorsystem einsetzt, dessen Titan enthaltende Katalysatorkomponente (1) eine solche ist, bei deren Herstellung die Fällung erzeugt worden ist bei relativ tiefen Temperaturen in einer relativ hochviskosen, vorgelegten Flüssigkeit aus (a) einem flüssigen Kohlenwasserstoff sowie (b) einem darin gelösten alpha-Monoalken-Polymerisat unter Vorgabe spezifischer Mengen- und Mengen/Zeit-Relationen.

Gegenstand der vorliegenden Erfindung ist dementsprechend ein Verfahren zum Herstellen kleinteiliger Homopolymerisate des Ethens oder Copolymerisate des Ethens mit untergeordneten Mengen $C_3$- bis $C_8$-, insbesondere $C_4$- bis $C_6$-alpha-Monoalken durch Polymerisation des bzw. der Monomeren bei Temperaturen im Bereich von 30 bis 150, insbesondere 50 bis 120 °C und Drücken im Bereich von 1 bis 200, insbesondere 5 bis 50 bar mittels eines Ziegler-Katalysatorsystems aus

(1) einer Titan enthaltenden Katalysatorkomponente, die erhalten worden ist als gefälltes Produkt beim Erzeugen einer Fällung in einer vorgelegten organischen Flüssigkeit durch Ein- und Zusammenbringen unter kräftiger Bewegung

(1.1) einer 0,1 bis 10, insbesondere 1 bis 2 molaren Lösung von Titantetrachlorid in einem flüssig vorliegendem, 5 bis 10, insbesondere 6 bis 8 Kohlenstoffatome aufweisenden Kohlenwasserstoff gesättigt-aliphatischer und/oder aromatischer Natur,

(1.2) einer 0,1 bis 10, insbesondere 1 bis 2 molaren Lösung einer aluminiumorganischen Verbindung der Summenformel $R_nAlCl_{3-n}$, worin stehen n für eine Zahl im Bereich von 1,5 bis 3, insbesondere 1,5 bis 2 und R für eine Alkylgruppe, die 1 bis 12, insbesondere 2 bis 4 Kohlenstoffatome enthält, in einem flüssig vorliegendem, 5 bis 10, insbesondere 6 bis 8 Kohlenstoffatome aufweisenden Kohlenwasserstoff gesättigt-aliphatischer und/oder aromatischer Natur sowie

(1.3) eines $C_2$- bis $C_8$-, vorzugsweise $C_2$- bis $C_4$-alpha-Monoalkens, und insbesondere von Ethen, und

(2) einer Aluminium enthaltenden Katalysatorkomponente, die ein Trialkylaluminium ist, das pro Alkylgruppe 1 bis 12, insbesondere 2 bis 4 Kohlenstoffatome enthält,

mit der Maßgabe, daß das Atomverhältnis Titan aus der Katalysatorkomponente (1) : Aluminium aus der Katalysatorkomponente (2) im Bereich von 1 : 1 bis 1 : 200, insbesondere 1 : 5 bis 1 : 20, liegt.

Das erfindungsgemäße Verfahren ist dadurch gekennzeichnet, daß als Titan enthaltende Katalysatorkomponente (1) eine solche eingesetzt wird, bei der die Fällung erzeugt worden ist bei Temperaturen im Bereich von -30 bis +30, insbesondere -10 bis +10 °C in einer vorgelegten organischen Flüssigkeit, die bei der Fällungstemperatur eine Viskosität im Bereich von 1,5 bis 30, vorzugsweise 5 bis 15, und insbesondere 8 bis 12 mm²/s hat und aus (a) einem flüssig vorliegendem, 5 bis 10 insbesondere 6 bis 8 Kohlenstoffatome aufweisenden Kohlenwasserstoff gesättigt-aliphatischer und/oder aromatischer Natur sowie (b) darin gelösten relativ geringen Mengen eines Polymerisats eines $C_2$- bis $C_6$-, vorzugsweise $C_3$- bis $C_4$-alpha-Monoalkens, und insbesondere eines Homopolymerisats des iso-Butens, besteht, mit den Maßgaben, daß (i) pro g Mol des ingesamt eingesetzten Titantetrachlorids insgesamt 2 bis 20, insbesondere 3,5 bis 5 Liter der vorgelegten organischen Flüssigkeit, insgesamt 0,5 bis 5, insbesondere 1 bis 2 g Mol der aluminiumorganischen Verbindung sowie insgesamt 5 bis 500, insbesondere 20 bis 100 g Mol des alpha-Monoalkens eingesetzt werden, und (ii) pro Moleinheit des ingesamt eingesetzten Titantetrachlorids 0,002 bis 0,15, insbesondere 0,005 bis 0,02 Moleinheiten pro Minute in gefälltes Produkt übergeführt sowie 0,02 bis 1, insbesondere 0,15 bis 0,35 Moleinheiten pro Minute des alpha-Monoalkens in das Fällungssystem eingebracht werden.

Beim Einsatz der erfindungsgemäß erhaltenen Titan enthaltenden Katalysatorkomponente (1) kann das Polymerisationsverfahren als solches in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder Trockenphasen-Polymerisationsverfahren im gerührten oder gewirbelten Bett. Die erwähnten technologischen Ausgestaltungen - mit anderen Worten: die technologischen Varianten der Polymerisation von Olefinen nach Ziegler - sind aus der Literatur und Praxis wohlbekannt, so daß sich nähere Ausführungen zu ihnen erübrigen.

Zu bemerken ist hierzu noch, daß die neue Titan enthaltende Katalysatorkomponente (1) - wie entsprechende bekannte Katalysatorkomponenten - z.B. außerhalb oder innerhalb des Polymerisationsraumes mit der Katalysatorkomponente (2) zusammengebracht werden kann; im letztgenannten Fall etwa durch getrennten Eintrag der Komponenten, die im übrigen in Form einer Suspension (Katalysatorkomponente (1)) bzw. Lösung (Katalysatorkomponente (2) gehandhabt werden können.

Schließlich ist noch zu sagen, daß die neuen Katalysatorkomponenten (1) sich sowohl zum Herstellen

3

von Homopolymerisaten des Ethens als auch zum Herstellen von Copolymerisaten des Ethens eignen und daß als Copolymerisationspartner neben Propen und Octen-1 vor allem Buten-1 und Hexen-1 in Betracht kommen. Die Regelung der Molekulargewichte der Polymerisate kann in einschlägig üblicher Weise erfolgen, insbesondere mittels Wasserstoff als Regulans.

Zu der erfindungsgemäßen Titan enthaltenden Katalysatorkomponente (1) als solcher ist das folgende zu sagen:

Sie wird erhalten als gefälltes Produkt beim Erzeugen einer Fällung in einer vorgelegten organischen Flüssigkeit durch Ein- und Zusammenbringen unter kräftiger Bewegung - wobei man in der Praxis insbesondere an ein konstantes heftiges Rühren denken wird, da die Intensität des Rührens bekanntlich von Einfluß auf die Morphologie der betroffenen Katalysatorkomponente ist -

(1.1) einer - oben näher definierten - Lösung von Titantetrachlorid in einem flüssig vorliegenden Kohlenwasserstoff,

(1.2) einer - oben näher definierten - Lösung einer aluminiumorganischen Verbindung in einem flüssig vorliegenden Kohlenwasserstoff, sowie

(1.3) einem - oben näher definierten - alpha-Monoalken.

Diese Verfahrensweise als solche ist insoweit geläufiger Stand der Technik und kann vom Fachmann ohne Schwierigkeiten vollzogen werden; - womit sich nähere Darlegungen zu ihr erübrigen. Es ist allenfalls zur stofflichen Seite zu bemerken, daß sich im gegebenen Zusammenhang als flüssig vorliegender Kohlenwasserstoff für die Lösungen unter (1.1) sowie (1.2) besonders gut eignen n-Hexan, n-Heptan und n-Octan; geeignet sind aber auch z.B. Toluol und Cyclohexan. Als aluminiumorganische Verbindung für die Lösung unter (1.2) sind speziell geeignet namentlich Diethylaluminiumchlorid und Aluminiumsesquichloride; es kann aber auch z.B. Trioctylaluminium eingesetzt werden. Seitens des alpha-Monoalkens unter (1.3) ist herausragend gut geeignet Ethen, gut geeignet Propen, 4-Methylpenten-1 und geeignet z.B. Buten-1 sowie Hexen-1.

In dem geschilderten, vorgegebenen Rahmen besteht die neue und erfindungsgemäße Besonderheit darin, daß man die Titan enthaltende Katalysatorkomponente (1) gewinnt, indem die Fällung erzeugt wird bei Temperaturen im Bereich von -30 bis +30, insbesondere -10 bis +10 $^{\circ}$ C in einer vorgelegten organischen Flüssigkeit, die bei der Fällungstemperatur eine Viskosität im Bereich von 1,5 bis 30, vorzugsweise 5 bis 15, und insbesondere 8 bis 12 mm$^2$/s hat und aus (a) einem flüssig vorliegendem, 5 bis 10, insbesondere 6 bis 8 Kohlenstoffatome aufweisenden Kohlenwasserstoff gesättigt-aliphatischer und/oder aromatischer Natur sowie (b) darin gelösten relativ geringen Mengen eines Polymerisats eines $C_2$- bis $C_6$-, vorzugsweise $C_3$- bis $C_4$-alpha-Monoalkens, und insbesondere eines Homopolymerisats des iso-Butens, besteht, mit den Maßgaben, daß (i) pro g Mol des insgesamt eingesetzten Titantetrachlorids insgesamt 2 bis 20, insbesondere 3,5 bis 5 Liter der vorgelegten organischen Flüssigkeit, insgesamt 0,5 bis 5, insbesondere 1 bis 2 g Mol der aluminiumorganischen Verbindung sowie insgesamt 5 bis 500, insbesondere 20 bis 100 g Mol des alpha-Monoalkens eingesetzt werden, und (ii) pro Moleinheit des insgesamt eingesetzten Titantetrachlorids 0,002 bis 0,15, insbesondere 0,005 bis 0,02 Moleinheiten pro Minute in gefälltes Produkt übergeführt sowie 0,o2 bis 1, insbesondere 0,15 bis 0,35 Moleinheiten pro Minute des alpha-Monoalkens in das Fällungssystem eingebracht werden.

Von erheblicher Bedeutung ist hierbei die vorgelegte organische Flüssigkeit, die (i) aus zwei Komponenten besteht, nämlich (a) dem flüssig vorliegenden Kohlenwasserstoff sowie (b) dem darin gelösten alpha-Monoalken-Polymerisat und die (ii) - bei der gewählten Fällungstemperatur - eine Viskosität im oben angegebenen Bereich haben muß; - wobei das Einstellen der jeweils gewünschten Viskosität in sehr einfacher Weise möglich ist über die gelöste Menge des gewählten alpha-Monoalken-Polymerisats: Je größer dessen Menge, je höher die Viskosität.

Zur stofflichen Seite der betroffenen, vorgelegten, organischen Flüssigkeit ist das folgende zu sagen:
Als flüssig vorliegender Kohlenwasserstoff sind besonders gut geeignet n-Hexan, n-Heptan und n-Octan; gut geeignet z.B. Toluol und Cyclohexan.

Zu den alpha-Monoalken-Polymerisaten ist generell zu sagen, daß es zweckmäßig ist, wenn diese Lösungsviskositäten (nach DIN 53 728/Blatt 4) von 100 bis 800, und insbesondere von 500 bis 700 cm$^3$/g haben.

Als Individuen erfindungsgemäß geeigneter alpha-Monoalken-Polymerisate sind zu nennen an erster Stelle Homopolymerisate des iso-Butens, denen in der Eignung nachgeordnet ist, z.B. Poly-1-hexen.

Als Aluminium enthaltende Katalysatorkomponente (2) des erfindungsgemäß einzusetzenden Ziegler-Katalysatorsystems kommen die einschlägig üblichen Trialkyl-Aluminium-Verbindungen in Betracht; sie sind aus Literatur und Praxis so wohlbekannt, daß auf sie nicht näher eingegangen zu werden braucht. Als herausragende Vertreter seien beispielsweise genannt Triethylaluminium, Tri-isobutylaluminium und Tri-n-butylaluminium.

EP 0 230 019 B1

Abschließend ist noch zu bemerken, daß die erfindungsgemäßen Titan enthaltenden Katalysatorkomponenten (1) empfindlich gegen hydrolytische sowie oxidative Einflüsse sind. Insoweit sollte man beim Umgang mit diesen Substanzen also die für Ziegler-Katalysatoren einschlägig üblichen Vorsichtsmaßnahmen treffen (z.B. Feuchtigkeitsausschluß, Inertgasatmosphäre).

Beispiel

Herstellen der Titan enthaltenden Katalysatorkomponente (1)

Es wird eine Fällung erzeugt in einer vorgelegten organischen Flüssigkeit durch Ein- und Zusammenbringen unter kräftiger Bewegung mittels konstantem Rühren.

(1.1) einer 1,5 molaren Lösung von Titantetrachlorid in n-Heptan

(1.2) einer 1, 5 molaren Lösung einer aluminiumorganischen Verbindung der Summenformel $R_nAlCl_{3-n}$, worin stehen n für die Zahl 2 und R für eine Ethylgruppe, in n-Heptan sowie

(1.3) von Ethen.

Erfindungsgemäß wird dabei im einzelnen so verfahren, daß die Fällung erzeugt wird, bei einer Temperatur von 0 °C in einer vorgelegten organischen Flüssigkeit, die bei der Fällungstemperatur eine Viskosität von 11 mm²/s hat und aus (a) n-Heptan (100 Gew.-Teile) sowie (b) darin gelösten relativ geringen Mengen (0,9 Gew.-Teile) eines Homopolymerisats des iso-Butens, welches eine Lösungsviskosität (nach DIN 53 728/Blatt 4) von 600 cm³/g hat, besteht, mit den Maßgaben, daß (i) pro g Mol des ingesamt eingesetzten Titantetrachlorids, insgesamt 4 Liter der vorgelegten organischen Flüssigkeit, insgesamt 2 g Mol der aluminiumorganischen Verbindung sowie insgesamt 60 g Mol Ethen eingesetzt werden, und (ii) pro Moleinheit des insgesamt eingesetzten Titantetrachlorids 0,008 Moleinheiten pro Minute in gefälltes Produkt übergeführt sowie 0,15 Moleinheiten pro Minute des Ethens in das Fällungssystem eingebracht werden.

Die dabei entstehende Suspension wird bei Raumtemperatur auf eine Fritte überführt, mehrmals mit n-Heptan gewaschen und getrocknet. Man erhält so eine Titan enthaltende Katalysatorkomponente (1), deren Titangehalt 2,4 Gew.-% beträgt.

Polymerisation mittels vorstehend beschriebener Katalysatorkomponente (1)

Ein 1 1 Autoklav wird mit 500 ml Isobutan und 125 mg Triisobutylaluminium beschickt (Katalysatorkomponente (2)) und bei 90 °C mit Ethen auf einen Gesamtdruck von 38 bar gebracht. Über eine Schleuse werden dann 60 mg Katalysatorkomponente (1) mit Ethen eingeschossen, so daß der Gesamtdruck im Autoklaven auf 40 bar steigt. Die Parameter Gesamtdruck 40 bar, Temperatur 90 °C werden über eine Zeitspanne von 2 Stunden aufrecht erhalten. Danach wird die Polymerisation durch Entspannen abgebrochen.

Daten des dabei erhaltenen Polyethens sind:

[ $\eta$ ]-Wert (nach DIN 53 728)

23 [dl/g]

Schüttdichte (nach DIN 53 468)

390 [g/l]

Katalysatoraktivität

84000 [$g_{PE}/g_{Ti} \cdot h$]

Siebanalyse:

| 0,125 | 0,125–0,250 | 0,250–0,5 | 0,5–1,0 | 1,0–2,0 | 2,0 [mm] |
|-------|-------------|-----------|---------|---------|----------|
| 0,1   | 51,7        | 45,7      | 2,1     | 0,4     | 0 [Gew.-%]. |

**Patentansprüche**

1. Verfahren zum Herstellen kleinteiliger Homopolymerisate des Ethens oder Copolymerisate des Ethens mit untergeordneten Mengen $C_3$- bis $C_8$-alpha--Monoalken durch Polymerisation des bzw. der Monomeren bei Temperaturen im Bereich von 30 bis 150 °C und Drücken im Bereich von 1 bis 200 bar mittels eines Ziegler-Katalysatorsystems aus

(1) einer Titan enthaltenden Katalysatorkomponente, die erhalten worden ist als gefälltes Produkt beim Erzeugen einer Fällung in einer vorgelegten organischen Flüssigkeit durch Ein- und Zusammenbringen unter kräftiger Bewegung

5

EP 0 230 019 B1

(1.1) einer 0,1 bis 10 molaren Lösung von Titantetrachlorid in einem flüssig vorliegendem, 5 bis 10 Kohlenstoffatome aufweisenden Kohlenwasserstoff gesättigt-aliphatischer und/oder aromatischer Natur,

(1.2) einer 0,1 bis 10 molaren Lösung einer aluminiumorganischen Verbindung der Summenformel $R_nAlCl_{3-n}$, worin stehen n für eine Zahl im Bereich von 1,5 bis 3 und R für eine Alkylgruppe, die 1 bis 12 Kohlenstoffatome enthält, in einem flüssig vorliegendem, 5 bis 10 Kohlenstoffatome aufweisenden Kohlenwasserstoff gesättigt-aliphatischer und/oder aromatischer Natur sowie

(1.3) eines $C_2$- bis $C_8$-alpha-Monoalkens und

(2) einer Alumnium enthaltenden Katalysatorkomponente, die ein Trialkylaluminium ist, das pro Alkylgruppe 1 bis 12 Kohlenstoffatome enthält,

mit der Maßgabe, daß das Atomverhältnis Titan aus der Katalysatorkomponente (1) : Aluminium aus der Katalysatorkomponente (2) im Bereich von 1 : 1 bis 1 : 200 liegt, dadurch gekennzeichnet, daß als Titan enthaltende Katalysatorkomponente (1) eine solche eingesetzt wird, bei der die Fällung erzeugt worden ist bei Temperaturen im Bereich von -30 bis +30° C in einer vorgelegten organischen Flüssigkeit, die bei der Fällungstemperatur eine Viskosität im Bereich von 1,5 bis 30 mm²/s hat und aus (a) einem flüssig vorliegendem, 5 bis 10 Kohlenstoffatome aufweisenden Kohlenwasserstoff gesättigt-aliphatischer und/oder aromatischer Natur sowie (b) darin gelösten relativ geringen Mengen eines Polymerisats eines $C_2$- bis $C_6$-alpha-Monoalkens besteht, mit den Maßgaben, daß (i) pro g Mol des ingesamt eingesetzten Titantetrachlorids insgesamt 2 bis 20 Liter der vorgelegten organischen Flüssigkeit, insgesamt 0,5 bis 5 g Mol der aluminiumorganischen Verbindung sowie insgesamt 5 bis 500 g Mol des alpha-Monoalkens eingesetzt werden, und (ii) pro Moleinheit des insgesamt eingesetzten Titantetrachlorids 0,002 bis 0,15 Moleinheiten pro Minute in gefälltes Produkt übergeführt sowie 0,02 bis 1 Moleinheiten pro Minute des alpha-Monoalkens in das Fällungssystem eingebracht werden.

## Claims

1. A process for preparing finely divided homopolymers of ethene or copolymers of ethene with minor amounts of $C_3$-$C_8$-alpha-monoalkene by polymerizing the monomer(s) at 30-150° C and 1-200 bar by means of a Ziegler catalyst system composed of

    (1) a titanium-containing catalyst component obtained as a precipitated product by bringing about a precipitation in a previously introduced organic liquid by introducing and bringing together with vigorous agitation (1.1) a 0.1-10 M solution of titanium tetrachloride in a liquid saturated aliphatic and/or aromatic hydrocarbon of 5-10 carbon atoms,

    (1.2) a 0.1-10 M solution of an organoaluminum compound of the empirical formula $R_nAlCl_{3-n}$, where n is a number within the range from 1.5 to 3 and R is alkyl of 1-12 carbon atoms, in a liquid saturated aliphatic and/or aromatic hydrocarbon of 5-10 carbon atoms and

    (1.3) a $C_2$-$C_8$-alpha-monoalkene and

    (2) an aluminum-containing catalyst component which is a trialkylaluminum which contains 1-12 carbon atoms per alkyl group,

    with the proviso that the atomic ratio of titanium in catalyst component (1):aluminum in catalyst component (2) lies within the range 1:1 to 1:200, which comprises using as the titanium-containing catalyst component (1) one where the precipitation has been brought about at temperatures within the range from -30 to +30° C in a previously introduced organic liquid which, at the precipitation temperature, has a viscosity within the range from 1.5 to 30 mm²/s and comprises (a) a liquid saturated aliphatic and/or aromatic hydrocarbon of 5-10 carbon atoms and (b), dissolved therein, relatively small amounts of a polymer of a $C_2$-$C_6$-alpha-monoalkene, with the provisos that (i) for every gram-mole of the total amount of titanium tetrachloride used a total of from 2 to 20 liters of the previously introduced organic liquid, a total of from 0.5 to 5 gram-moles of the organoaluminum compound and a total of from 5 to 500 gram moles of the alpha-monoalkene are used and (ii) for every mole unit of the total amount of titanium tetrachloride used from 0.002 to 0.15 mole units per minute are converted into precipitated product and from 0.02 to 1 mole unit per minute of the alpha-monoalkene are introduced into the precipitation system.

## Revendications

1. Procédé de préparation de produits en petites particules d'homopolymérisation de l'éthylène ou de copolymérisation de l'éthylène avec des quantités mineures d'α-monoalcène en $C_3$ à $C_8$, par polymérisation du ou des monomères à des températures dans la gamme de 30 à 150° C et sous des

6

pressions dans la gamme de 1 à 100 bar, au moyen d'un système catalytique de Ziegler composé de:

(1) un composant de catalyseur contenant du titane, qui a été obtenu en tant que produit précipité au cours d'une précipitation provoquée, dans un liquide organique introduit préalablement, par l'introduction et la mise en contact, sous agitation vigoureuse,

(1.1) d'une solution 0,1 à 10 molaire de tétrachlorure de titane dans un hydrocarbure de nature aliphatique saturée et/ou aromatique, renfermant de 5 à 10 atomes de carbone et se présentant à l'état liquide,

(1.2) d'une solution 0,1 à 10 molaire d'un composé organo-aluminique de formule brute $R_nAlCl_{3-n}$, dans laquelle n est mis pour un nombre compris entre 1,5 et 3 et R pour un groupement alkyle qui contient de 1 à 12 atomes de carbone, dans un hydrocarbure de nature aliphatique saturée et/ou aromatique, renfermant de 5 à 10 atomes de carbone et se présentant à l'état liquide, ainsi que

(1.3) d'un $\alpha$-monoalcène en $C_2$ à $C_8$, et

(2) un composant de catalyseur contenant de l'aluminium, qui est un trialkyl-aluminium contenant de 1 à 12 atomes de carbone par groupement alkyle,

étant spécifié que le rapport atomique du titane du composant de catalyseur (1) à l'aluminium du composant de catalyseur (2) se situe dans la gamme de 1:1 à 1:200, caractérisé en ce qu'on utilise, comme composant de catalyseur (1) contenant du titane, un composant pour lequel la précipitation a été provoquée à des températures dans la gamme de -30 à +30° C dans un liquide organique introduit préalablement qui a une viscosité dans la gamme de 1,5 à 30 mm²/s à la température de précipitation et qui se compose (a) d'un hydrocarbure de nature aliphatique saturée et/ou aromatique, renfermant de 5 à 10 atomes de carbone et se présentant à l'état liquide et (b), en solution dans celui-ci, de quantités relativement petites d'un polymère d'un $\alpha$-monoalcène en $C_2$ à $C_6$, étant spécifié que (i) par mole du tétrachlorure de titane utilisé au total, on utilise de 2 à 20 litres au total du liquide organique introduit préalablement, de 0,5 à 5 moles au total du composé organo-aluminique et de 5 à 500 moles de l'$\alpha$-monoalcène, et que (ii) par unité molaire du tétrachlorure de titane utilisé au total, on transforme de 0,002 à 0,15 unité molaire par minute en produit précipité et on introduit de 0,02 à 1 unité molaire par minute de l'$\alpha$-monoalcène dans le système de précipitation.